# EUROPÄISCHE PATENTSCHRIFT

(11) **EP 3 143 081 B1**
(45) Veröffentlichungstag und Bekanntmachung des Hinweises auf die Patenterteilung: **08.12.2021**
(21) Anmeldenummer: 15712098.1
(22) Anmeldetag: 18.03.2015
(51) Int. Cl.: C08K 3/36, C08K 5/548, C08L 9/00, C08L 21/00

(54) **SCHWEFELVERNETZBARE KAUTSCHUKMISCHUNG UND FAHRZEUGREIFEN**
SULFUR-CROSSLINKABLE RUBBER MIXTURE AND VEHICLE TIRE
MÉLANGE DE CAOUTCHOUC VULCANISABLE AU SOUFRE ET PNEU DE VÉHICULE

(30) Priorität: 15.05.2014 DE 102014209255
(43) Veröffentlichungstag der Anmeldung: 22.03.2017
(73) Patentinhaber: Continental Reifen Deutschland GmbH, 30165 Hannover (DE)
(72) Erfinder: SCHWEKENDIEK, Kirsten, 30167 Hannover (DE); MÜLLER, Norbert, 29336 Nienhagen (DE); RECKER, Carla, 30167 Hannover (DE); SCHOEFFEL, Julia, 30453 Hannover (DE)
(74) Vertreter: Continental Corporation
(86) Internationale Anmeldenummer: PCT/EP2015/055595
(87) Internationale Veröffentlichungsnummer: WO 2015/172915

(56) Entgegenhaltungen:
- JP-A- 2002 201 312

## Beschreibung

Die Erfindung betrifft eine schwefelvernetzbare Kautschukmischung, insbesondere für Laufstreifen von Fahrzeugreifen, und einen Fahrzeugreifen.

Die Kautschukzusammensetzung des Laufstreifens bestimmt in hohem Maße die Fahreigenschaften eines Fahrzeugreifens, insbesondere eines Fahrzeugluftreifens. Unter dem Begriff Fahrzeugreifen werden in der vorliegenden Schrift Fahrzeugluftreifen, Vollgummireifen und Zweiradreifen verstanden.

Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.

Es bestehen Zielkonflikte zwischen den meisten der bekannten Reifeneigenschaften wie Nassgriffverhalten, Trockenbremsen, Handling-Verhalten, Rollwiderstand, Wintereigenschaften, Abriebverhalten und Reißeigenschaften.

Insbesondere bei Fahrzeugluftreifen wurden vielfältige Versuche unternommen, die Eigenschaften des Reifens durch die Variation der Polymerkomponenten, der Füllstoffe und der sonstigen Zuschlagstoffe vor allem in der Laufstreifenmischung positiv zu beeinflussen.

Dabei muss man berücksichtigen, dass eine Verbesserung in der einen Reifeneigenschaft oft eine Verschlechterung einer anderen Eigenschaft mit sich bringt.

In einem gegebenen Mischungssystem existieren zum Beispiel verschiedene, bekannte Möglichkeiten das Handling-Verhalten zu optimieren, in dem die Steifigkeit der Kautschukmischung erhöht wird. Zu erwähnen sind hier z.B. eine Erhöhung des Füllgrades und die Erhöhung der Netzknotendichte der vulkanisierten Kautschukmischung. Während ein erhöhter Füllstoffanteil Nachteile im Rollwiderstand mit sich bringt, führt die Anhebung des Netzwerkes zu einer Verschlechterung in den Reißeigenschaften sowie der Nassgriffindikatoren der Kautschukmischung.

Es ist außerdem bekannt, dass Kautschukmischungen, insbesondere für den Laufstreifen von Fahrzeugluftreifen, Kieselsäure als Füllstoff enthalten können. Zudem ist bekannt, dass sich Vorteile hinsichtlich des Rollwiderstandsverhaltens und der Prozessierbarkeit der Kautschukmischung ergeben, wenn die Kieselsäure mittels Silan-Kupplungsagenzien an das oder die Polymer(e) angebunden ist.

Im Stand der Technik bekannte Silan-Kupplungsagenzien gehen beispielsweise aus der DE 2536674 C3 und der DE 2255577 C3 hervor.

Die JP 2002201312 A offenbart eine Kautschukmischung enthaltend verschiedene Modifizierungsagenzien ("rubber modifier"), wobei in der Formel (IV) der JP 2002201312 A ein Silan mit einer harnstoffhaltigen Gruppe abgebildet ist, wobei die Gruppe zwischen dem ersten Stickstoffatom der harnstoffhaltigen Gruppe und dem Schwefel der Sn-Gruppe aromatisch ist.

Der vorliegenden Erfindung liegt nun die Aufgabe zugrunde, eine Kautschukmischung bereitzustellen, die im Vergleich zum Stand der Technik eine höhere Steifigkeit aufweist, ohne dass die Indikatoren für den Zielkonflikt zwischen Rollwiderstand und Nassgriff signifikant nachteilig beeinflusst werden. Zusätzlich soll optional die Abriebresistenz der Kautschukmischung verbessert werden.

Gelöst wird diese Aufgabe durch eine Kautschukmischung, die die folgenden Bestandteile enthält:
- wenigstens einen Dienkautschuk und
- 10 bis 200 phr wenigstens einer Kieselsäure und
- 2 bis 20 phf wenigstens eines Silans mit der allgemeinen Summenformel

   I) [(R¹)₃Si-X]ₘSₙ(R²)₂₋ₘ

   , wobei die Reste R¹ innerhalb eines Moleküls gleich oder verschieden sein können und Alkoxy-Gruppen mit 1 bis 10 Kohlenstoffatomen oder zyklische Dialkoxy-Gruppen mit 2 bis 10 Kohlenstoffatomen oder Cycloalkoxygruppen mit 4 bis 10 Kohlenstoffatomen oder Phenoxygruppen oder Arylgruppen mit 6 bis 20 Kohlenstoffatomen oder Alkylgruppen mit 1 bis 10 Kohlenstoffatomen oder Alkenylgruppen mit 2 bis 20 Kohlenstoffatomen oder Aralkylgruppen mit 7 bis 20 Kohlenstoffatomen oder Halogenide sind und wobei X eine polare organische harnstoffhaltige Gruppe ist und wobei m den Wert 1 oder 2 annimmt und wobei n eine ganze Zahl von 1 bis 8 ist und wobei R² ein Wasserstoffatom oder eine Acylgruppe mit 1 bis 20 Kohlenstoffatomen ist, wobei die polare organische harnstoffhaltige Gruppe X wenigstens ein Harnstoff-Derivat als polare Funktionalität aufweist, welches an den beiden Stickstoffatomen eine organische Kohlenwasserstoffgruppe trägt, wobei die Gruppe zwischen dem ersten Stickstoffatom der harnstoffhaltigen Gruppe und dem Schwefel der Sₙ-Gruppe aliphatisch ist und die Gruppe zwischen dem zweiten Stickstoffatom der harnstoffhaltigen Gruppe und dem Siliziumatom der (R¹)₃Si-Gruppe aliphatisch oder aromatisch ist.

Überraschenderweise zeigt die Kautschukmischung im Vergleich zum Stand der Technik eine höhere Steifigkeit bei nahezu gleichbleibenden Indikatoren für Rollwiderstand und Nassgriff. Fahrzeugreifen, die die erfindungsgemäße Kautschukmischung im Laufstreifen und/oder anderen Bauteilen enthalten, zeigen ein optimiertes Verhalten im Hinblick auf die Zielkonflikte Handling, Rollwiderstand und Nassgriff.

Zusätzlich weist die erfindungsgemäße Kautschukmischung im Vergleich zum Stand der Technik kürzere Ausvulkanisationszeiten auf, womit eine Kostenersparnis bei der Herstellung von z.B. Fahrzeugreifen ermöglicht ist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.

Die in dieser Schrift verwendete Angabe phf (parts per hundred parts of filler by weight) ist dabei die in der Kautschukindustrie gebräuchliche Mengenangabe für Kupplungsagenzien für Füllstoffe.

Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Erfindungsgemäß enthält die Kautschukmischung wenigstens einen Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der Dienkautschuk ist dabei ausgewählt aus der Gruppe bestehend aus natürlichem Polyisopren und/oder synthetischem Polyisopren und/oder epoxidiertem Polyisopren und/oder Butadien-Kautschuk und/oder Butadien-Isopren-Kautschuk und/oder lösungspolymerisiertem Styrol-Butadien-Kautschuk und/oder emulsionspolymerisiertem Styrol-Butadien-Kautschuk und/oder Styrol-Isopren-Kautschuk und/oder Flüssigkautschuken mit einem Molekulargewicht M_{w} von größer als 20000 g/mol und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydriertem AcrylnitrilbutadienKautschuk und/oder hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.

Vorzugsweise ist der Dienkautschuk ausgewählt aus der Gruppe, bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk.

Gemäß einer bevorzugten Weiterbildung der Erfindung werden in der Kautschukmischung wenigstens zwei verschiedene Dienkautschuk-Typen eingesetzt.

Gemäß einer bevorzugten Ausführungsform der Erfindung enthält die erfindungsgemäße Kautschukmischung 5 bis 40 phr, bevorzugt 5 bis 30 phr, wenigstens eines natürlichen und/oder wenigstens eines synthetischen Polyisoprens und 25 bis 85 phr wenigstens eines Styrol-Butadien-Kautschuks. Hierdurch ergibt sich eine gute Verarbeitbarkeit der Kautschukmischung in Kombination mit verbesserten physikalischen Eigenschaften, wie insbesondere der Steifigkeit, wobei sonstige Eigenschaften, wie Rollwiderstand und/oder Nassgriff und/oder Abriebresistenz und/oder Reißeigenschaften, auf einem sehr guten Niveau liegen.

Gemäß einer weiteren bevorzugten Ausführungsform der Erfindung enthält die erfindungsgemäße Kautschukmischung 5 bis 30 phr wenigstens eines natürlichen und/oder wenigstens eines synthetischen Polyisoprens und 25 bis 80 phr wenigstens eines Styrol-Butadien-Kautschuks und 5 bis 50 phr wenigstens eines Butadien-Kautschuks. Hierbei sind wenigstens drei Kautschuke in der erfindungsgemäßen Kautschukmischung enthalten, wobei die Summe aller Kautschuke 100 phr ergibt.

Hierdurch ergibt sich eine gute Verarbeitbarkeit der Kautschukmischung in Kombination mit verbesserten physikalischen Eigenschaften, wie insbesondere der Steifigkeit, wobei sonstige Eigenschaften, wie Rollwiderstand und/oder Nassgriff und/oder Abriebresistenz und/oder Reißeigenschaften, auf einem sehr guten Niveau liegen. Eine derartige Kautschukmischung ist insbesondere für Laufstreifen von Fahrzeugreifen geeignet, insbesondere von PKW-Reifen.

Gemäß einer weiteren bevorzugten Ausführungsform der Erfindung enthält die erfindungsgemäße Kautschukmischung 60 bis 100 phr, bevorzugt 80 bis 100 phr, wenigstens eines natürlichen und/oder synthetischen Polyisoprens und 0 bis 40 phr, bevorzugt 5 bis 30 phr, besonders bevorzugt 5 bis 20 phr, wenigstens eines Butadien-Kautschuks und 0 bis 40 phr, bevorzugt 5 bis 30 phr, besonders bevorzugt 5 bis 20 phr, wenigstens eines Styrol-Butadien-Kautschuks.

Hierdurch ergibt sich eine gute Verarbeitbarkeit der Kautschukmischung in Kombination mit verbesserten physikalischen Eigenschaften, wie insbesondere der Steifigkeit, wobei sonstige Eigenschaften, wie Rollwiderstand und/oder Nassgriff und/oder Abriebresistenz und/oder Reißeigenschaften, auf einem sehr guten Niveau liegen. Eine derartige Kautschukmischung ist insbesondere für Laufstreifen von Fahrzeugreifen geeignet, insbesondere von LKW-Reifen. Gemäß einer bevorzugten Weiterbildung der Erfindung enthält die Kautschukmischung hierbei 60 bis 100 phr wenigstens eines natürlichen und/oder synthetischen Polyisoprens und 5 bis 30 phr wenigstens eines Butadien-Kautschuks und/oder 5 bis 30 phr wenigstens eines Styrol-Butadien-Kautschuks.

Gemäß einer weiteren bevorzugten Ausführungsform der Erfindung enthält die erfindungsgemäße Kautschukmischung 0 bis 30 phr, bevorzugt 5 bis 30 phr, wenigstens eines Butadien-Kautschuks und 70 bis 100 phr, bevorzugt 70 bis 95 phr, wenigstens eines natürlichen und/oder synthetischen Polyisoprens. Eine derartige Kautschukmischung zeigt insbesondere in inneren Bauteilen, wie als Gürtelgummierung und/oder Karkassgummierung, gute Eigenschaften, wie beispielsweise hinsichtlich der Verarbeitbarkeit und/oder des Wärmeaufbaus (Rollwiderstand) und/oder der Reißeigenschaften.

Gemäß einer weiteren bevorzugten Ausführungsform der Erfindung enthält die erfindungsgemäße Kautschukmischung 50 bis 80 phr wenigstens eines Butadien-Kautschuks und 20 bis 50 phr wenigstens eines natürlichen und/oder synthetischen Polyisoprens. Eine derartige Kautschukmischung zeigt insbesondere in äußeren Reifenbauteilen, wie der Seitenwand und/oder dem Hornprofil, gute Eigenschaften, wie beispielsweise hinsichtlich der Verarbeitbarkeit und/oder des Wärmeaufbaus (Rollwiderstand) und/oder der Reißeigenschaften und/oder der Ermüdungsbeständigkeit.

Die erfindungsgemäße Kautschukmischung enthält 10 bis 200 phr, bevorzugt 20 bis 180 phr, besonders bevorzugt 40 bis 150 phr, ganz besonders bevorzugt 40 bis 110 phr und wiederum ganz besonders bevorzugt 80 bis 110 phr wenigstens einer Kieselsäure.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, besonders bevorzugt von 100 bis 260 m²/g und ganz besonders bevorzugt von 130 bis 235 m²/g, und eine CTAB-Oberfläche (gemäß ASTM D 3765) von 30 bis 400 m²/g, bevorzugt von 30 bis 255 m²/g, besonders bevorzugt von 100 bis 255 m²/g und ganz besonders bevorzugt von 110 bis 230 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch hoch dispergierbare Kieselsäuren, so genannte HD-Kieselsäuren (z.B. Zeosil^{®} 1165 MP der Firma Rhodia), zum Einsatz kommen.

Erfindungswesentlich ist es, dass die Kautschukmischung ein Silan enthält, welches die allgemeine Summenformel

I) [(R¹)₃Si-X]ₘSₙ(R²)₂₋ₘ

aufweist, wobei die Reste R¹ innerhalb eines Moleküls gleich oder verschieden voneinander sein können und Alkoxy-Gruppen mit 1 bis 10 Kohlenstoffatomen oder zyklische Dialkoxy-Gruppen mit 2 bis 10 Kohlenstoffatomen oder Cycloalkoxygruppen mit 4 bis 10 Kohlenstoffatomen oder Phenoxygruppen oder Arylgruppen mit 6 bis 20 Kohlenstoffatomen oder Alkylgruppen mit 1 bis 10 Kohlenstoffatomen oder

Alkenylgruppen mit 2 bis 20 Kohlenstoffatomen oder Aralkylgruppen mit 7 bis 20 Kohlenstoffatomen oder Halogenide sind,
und wobei X eine polare organische harnstoffhaltige Gruppe ist
und wobei m den Wert 1 oder 2 annimmt
und wobei n eine ganze Zahl von 1 bis 8 ist
und wobei R² eine Acylgruppe mit 1 bis 20 Kohlenstoffatomen oder ein Wasserstoffatom ist,
wobei die polare organische harnstoffhaltige Gruppe X wenigstens ein Harnstoff-Derivat
als polare Funktionalität aufweist, welches an den beiden Stickstoffatomen eine organische Kohlenwasserstoffgruppe trägt, wobei die Gruppe zwischen dem ersten Stickstoffatom der harnstoffhaltigen Gruppe und dem Schwefel der Sₙ-Gruppe aliphatisch ist und die Gruppe zwischen dem zweiten Stickstoffatom der harnstoffhaltigen Gruppe und dem Siliziumatom der (R¹)₃Si-Gruppe aliphatisch oder aromatisch ist.

Zyklische Dialkoxy-Gruppen sind Derivate von Diolen.

Dieses Silan gemäß Formel I) dient dabei in der erfindungsgemäßen Kautschukmischung
a) als Kupplungsagens zur Anbindung der in der Kautschukmischung enthaltenen Kieselsäure an die Polymerketten des Dienkautschuks bzw. der Dienkautschuke
   und/oder
b) zur Oberflächenmodifikation von Kieselsäure durch Anbindung an die Kieselsäure-Partikel ohne Anbindung an die Polymerketten.

Silan-Kupplungsagenzien sind allgemein bekannt und reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Einige Silane können zudem an Polymerketten der Kautschuk(e) anbinden.

In der erfindungsgemäßen Kautschukmischung ersetzt das oben genannte Silan ganz oder teilweise die im Stand der Technik bekannten Silane wie TESPD (3,3'-Bis(triethoxysilylpropyl)disulfid) oder TESPT (3,3'-Bis(triethoxysilylpropyl)tetrasulfid) oder Octyltriethoxysilane (z.B. Si208^{®}, Fa. Evonik) oder Mercaptosilanen, wie 3-Mercaptopropyltriethoxysilan (z.B. Si263^{®}, Fa. Evonik), oder geblockten Mercaptosilanen, wie 3-Octanoylthio-1-propyltriethoxysilan (z.B. NXT-Silan, Fa. Momentive), bei einer gleichzeitigen Erhöhung der Steifigkeit ohne das sich Nachteile hinsichtlich des Rollwiderstands- und Nassgriffverhaltens zeigen.

Es ist im Rahmen der vorliegenden Erfindung auch denkbar, dass das oben genannte Silan mit der allgemeinen Summenformel I) in Kombination mit einem oder mehreren Silanen aus dem Stand der Technik eingesetzt wird.

Das Silan mit der allgemeinen Summenformel I) ist in Mengen von 2 bis 20 phf, bevorzugt 2 bis 15 phf, besonders bevorzugt 5 bis 15 phf, in der erfindungsgemäßen Kautschukmischung enthalten. Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Erfindungswesentlich ist es, dass das Silan mit der oben genannten Summenformel I) eine polare organische harnstoffhaltige Gruppe X aufweist. Diese polare harnstoffhaltige Gruppe X verknüpft das oder die Siliziumatom(e) mit einem Schwefelatom der Gruppierung Sn.

In der Fachwelt wird eine derartige verknüpfende Gruppe auch Spacer genannt, da sie den Abstand zwischen Silizium (Anbindung an den Füllstoff) und Schwefel (Anbindung an den Dienkautschuk) bestimmt.

Die im Stand der Technik bekannten organischen Spacer enthalten üblicherweise einen oder mehrere Propyl-Reste (oder auch eine Propyl-Gruppe genannt) wie es z.B. in den oben aufgeführten Silanen TESPD und TESPT und Mercaptosilanen und NXT-Silanen üblich ist.

Mit der erfindungsgemäßen Kautschukmischung wurde gefunden, dass unter Verwendung eines Silans mit einem polaren harnstoffhaltigen Spacer X anstatt eines Silanes aus dem Stand der Technik eine erhöhte Steifigkeit der Kautschukmischung bei einer gleichzeitigen Verkürzung der Ausvulkanisationszeit erzielt wird.

Dabei ist unter "polare organische harnstoffhaltige Gruppe X" zu verstehen, dass diese eine unverzweigte, verzweigte oder zyklische Kohlenwasserstoffgruppe ist, die wenigstens eine polare organische Harnstoff- Funktionalität aufweist.

Durch die Heteroatome der wenigstens einen Harnstoff-Funktionalität, wie Sauerstoff (O), Stickstoff (N), ergibt sich im Vergleich zu Kohlenwasserstoff-Resten ohne Heteroatome, wie Alkyl-Gruppen, eine größere Polarität innerhalb des Moleküls, wodurch sich im Rahmen der vorliegenden Erfindung die Bezeichnung "polare" ergibt. KohlenwasserstoffReste ohne Heteroatome werden in der Fachwelt allgemein als unpolar eingestuft.

Der Ausdruck "polare" ist als zusätzliche Beschreibung der Gruppe X zu verstehen, wobei das erfindungswesentliche Merkmal "harnstoffhaltig" ist.

Die oben genannte Beschreibung der polaren organischen harnstoffhaltigen Funktionalitäten ist derart zu verstehen, dass die wenigstens eine im kohlenwasserstoffhaltigen Rest gebundene Harnstoff-Funktionalität durch die Anbindung an den kohlenwasserstoffhaltigen Rest als Harnstoff-Derivat vorliegt, sodass die polare organische Gruppe wenigstens eine folgende polare Funktionalität aufweist:

II) -(H)N-CO-N(H)-

Die Gruppe II) ist über Reste R (organische Kohlenwasserstoffgruppe wie unten beschrieben) zur einen Seite an die Sₙ-Gruppe geknüpft und zur anderen Seite über Reste R (organische Kohlenwasserstoffgruppe wie unten beschrieben) an das Siliziumatom der (R¹)₃Si-Gruppe. Die Reste R können auf beiden Seiten gleich oder verschieden voneinander sein.

In einer bevorzugten Ausführungsform der Erfindung weist die polare organische harnstoffhaltige Gruppe X wenigstens ein Harnstoff-Derivat gemäß Formel II) als polare Funktionalität auf, welches an den beiden Stickstoffatomen eine organische Kohlenwasserstoffgruppe R mit 1 bis 30 Kohlenstoffatomen, bevorzugt 1 bis 20 Kohlenstoffatomen, besonders bevorzugt 1 bis 10 Kohlenstoffatomen, ganz besonders bevorzugt 1 bis 7 Kohlenstoffatomen, insbesondere bevorzugt 2 oder 3 Kohlenstoffatomen, trägt, wobei die Gruppe zwischen dem einen Stickstoff der harnstoffhaltigen Gruppe und dem Schwefel der Sₙ-Gruppe aliphatisch, bevorzugt eine Alkylgruppe, ist und die Gruppe zwischen dem zweiten Stickstoffatom der harnstoffhaltigen Gruppe und dem Siliziumatom der (R¹)₃Si-Gruppe sowohl aliphatisch als auch aromatisch sein kann. Die Reste R können somit auf beiden Seiten gleich oder verschieden voneinander sein.

Erfindungsgemäß weist die polare organische harnstoffhaltige Gruppe X wenigstens ein Harnstoff-Derivat gemäß Formel II) als polare Funktionalität auf, welches an den beiden Stickstoffatomen eine organische Kohlenwasserstoffgruppe trägt, wobei die Gruppe (organische Kohlenwasserstoffgruppe) zwischen dem einen Stickstoff der harnstoffhaltigen Gruppe und dem Schwefel der Sₙ-Gruppe aliphatisch, besonders bevorzugt eine Alkylgruppe, ist und die Gruppe zwischen dem zweiten Stickstoffatom der harnstoffhaltigen Gruppe und dem Siliziumatom der (R¹)₃Si-Gruppe aliphatisch, besonders bevorzugt eine Alkylgruppe, ist.

Besonders bevorzugt sind somit das Stickstoffatom und das Siliziumatom der (R¹)₃Si-Gruppe über eine Alkylgruppe und das andere Stickstoffatom und das Schwefelatom der Sₙ-Gruppe ebenfalls über eine Alkylgruppe miteinander verknüpft. Hierbei kann es sich bei den beiden Gruppen um den gleichen Alkylrest oder voneinander verschiedene Alkylreste (z.B. unterschiedliche Zahl von Kohlenstoffatomen) handeln.

Hiermit werden im Vergleich zum Stand der Technik besonders hohe Steifigkeiten und Zugfestigkeiten und/oder sogar verbesserte Abriebeigenschaften der Kautschukmischung erzielt. Stand der Technik ist hier die JP2002201312A, in der Agenzien mit aromatischen Spacern enthaltend eine stickstoffhaltige organische Funktionalität offenbart werden, die im Vergleich zu anderen Silanen geringere Steifigkeiten und geringere Zugfestigkeiten aufweisen.

Gemäß Römpp Online Lexikon, Version 4.0 sind "aliphatische Verbindungen" "funktionalisierte oder unfunktionalisierte organische Verbindungen, die kein aromatisches Ringsystem ... enthalten."

Gemäß einer bevorzugten Ausführungsform der Erfindung handelt es sich bei X um einen 1-Ethyl-3-Propyl-Harnstoff-Rest. Hierbei ist im Rahmen der vorliegenden Erfindung zwischen dem ersten Stickstoffatom der Harnstoff-Funktionalität und dem Si-Atom die Propyl-Gruppe und zwischen dem zweiten Stickstoffatom der Harnstoff-Funktionalität und dem S-Atom der Sₙ-Gruppe die Ethyl-Gruppe angeordnet. Dies gilt bevorzugt für alle Ausführungsformen der vorliegenden Erfindung.

Es ist jedoch für die Lösung der zugrunde liegenden technischen Aufgabe prinzipiell auch denkbar, dass die Ethyl- und Propyl-Reste umgekehrt zwischen Harnstoff und Si bzw. Harnstoff und S-Atom angeordnet sind.

Neben wenigstens einer wie oben beschriebenen Harnstoff-Funktionalität kann die Gruppe X an den wie oben beschriebenen organischen Kohlenwasserstoffgruppen (Reste R) mit F-, Cl-, Br-, I-, CN- oder HS- substituiert sein.

Die an das Siliziumatom gebundenen Reste R¹ sind Alkoxy-Gruppen mit 1 bis 10 Kohlenstoffatomen, bevorzugt Methoxy- oder Ethoxygruppen, oder zyklische Dialkoxy-Gruppen mit 2 bis 10 Kohlenstoffatomen oder Cycloalkoxygruppen mit 4 bis 10 Kohlenstoffatomen oder Phenoxygruppen oder Arylgruppen mit 6 bis 20 Kohlenstoffatomen, bevorzugt Phenyl, oder Alkylgruppen mit 1 bis 10 Kohlenstoffatomen, bevorzugt Methyl- oder Ethylgruppen, oder Alkenylgruppen mit 2 bis 20 Kohlenstoffatomen oder Aralkylgruppen mit 7 bis 20 Kohlenstoffatomen oder Halogenide, bevorzugt Chloride (R¹ = Cl), und können innerhalb eines Moleküls gleich oder verschieden voneinander sein.

Es ist dabei auch denkbar, dass eine zyklische Dialkoxy-Gruppe (das Derivat eines Diols) so angebunden ist, dass es mit beiden Sauerstoffatomen an das Siliziumatom gebunden ist und somit als zwei angebundene Reste R¹ zählt, wobei der weitere Rest R¹ ausgewählt ist aus den oben genannten Möglichkeiten.

Bevorzugt handelt es sich bei R¹ jedoch um Methoxy- und/oder Ethoxy-Gruppen. Besonders bevorzugt sind alle drei Reste R¹ gleich und Methoxy- und/oder Ethoxy-Gruppen und ganz besonders bevorzugt drei Ethoxy-Gruppen.

Der Index m kann die Werte 1 oder 2 annehmen. Somit kann die Gruppe

III) [(R¹)₃Si-X]

einmal oder zweimal pro Molekül vorhanden sein. Im Fall von m = 2 ist der Schwefel also nur an zwei dieser Gruppen gebunden, sodass in diesem Fall kein Rest R² im Molekül vorhanden ist. Die beiden Gruppen III) sind dann über die Gruppierung Sₙ mit n = 1 bis 8 verknüpft, also über ein Schwefelatom oder eine Kette von 2 bis 8 Schwefelatomen. Bevorzugt ist n eine ganze Zahl von 1 bis 6, besonders bevorzugt von 1 bis 4. Hiermit ergeben sich besonders gute Eigenschaften im Hinblick auf die Steifigkeit und das Vulkanisationsverhalten, insbesondere die Ausvulkanisationszeit.

Die Bestimmung des Schwefelgehaltes (Wert für n) erfolgt mittels ¹H-NMR

Für den Fall, dass m = 1 ist, ist ein Rest R² an das von der Silyl-Gruppe am weitesten entfernte Schwefelatom gebunden. R² ist ein Wasserstoffatom oder eine Acylgruppe mit 1 bis 20 Kohlenstoffatomen oder. Handelt es sich bei dem Rest R² um eine Acylgruppe, so ist bevorzugt das Kohlenstoffatom, welches die Keto-Gruppe, also die Doppelbindung zum Sauerstoffatom, trägt an das von der Silyl-Gruppe am weitesten entfernte Schwefelatom gebunden.

Gemäß einer bevorzugten Ausführungsform handelt es sich bei der Acylgruppe um einen Acetyl-Rest, also die Gruppierung -CO-CH₃.

Unter Silyl-Gruppe wird im Rahmen der vorliegenden Erfindung die Gruppierung

IV) (R¹)₃Si-

verstanden.

Damit kann es sich bei dem Silan entweder um ein Mercaptosilan oder ein geschütztes Mercaptosilan, auch geblocktes Mercaptosilan genannt, handeln.

Gemäß einer bevorzugten Ausführungsform der Erfindung enthält die erfindungsgemäße Kautschukmischung ein Silan mit der folgenden Struktur:

V) [(R¹)₃Si-X]₂Sₙ

In der oben genannten Summenformel I) ist
m somit gleich 2, sodass die Gruppierung Sₙ an beiden Seiten an eine Gruppierung

III) [(R¹)₃Si-X]

geknüpft ist.

Besonders bevorzugt sind die polaren harnstoffhaltigen Gruppen X und die Reste R¹ auf beiden Seiten des Moleküls gleich.

Hierbei ist R¹ besonders bevorzugt eine Ethoxy-Gruppe, die dann insgesamt sechsmal im Molekül vorhanden ist.

Bevorzugt ist X auf beiden Seiten ein 1-Ethyl-3-Propyl-Harnstoff-Rest.

Gemäß einer bevorzugten Ausführungsform ist m = 2 und n gleich 2, sodass eine Kette von zwei Schwefelatomen vorliegt, von der jeweils ein Schwefelatom an jeweils eine der Ethyl-Gruppen der beiden 1-Ethyl-3-Propyl-Harnstoff-Reste gebunden ist.

Das bevorzugte Silan hat also die folgende Struktur VI):

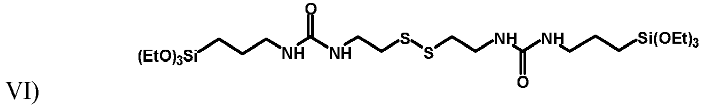

Mit diesem Silan werden besonders gute Steifigkeiten bei gleichbleibendem Zielkonflikt Rollwiderstand versus Nassgriff erzielt.

Dieses Silan kann beispielsweise durch Umsetzung von Cystamindihydrochlorid mit 3-Isocyanatopropyltriethoxysilan in Wasser mit Zusatz wenigstens einer Base, beispielsweise eine 50%-ige KOH-Lösung (KOH=Kaliumhydroxid) erhalten werden.

Die Analyse der beschriebenen Silane der Ausführungsformen gemäß Formel I) erfolgt mittels ¹³C-NMR, ¹H-NMR und ²⁹Si-NMR

Gemäß einer weiteren bevorzugten Ausführungsform ist m = 2 und n eine ganze Zahl von 2 bis 8, besonders bevorzugt 3 oder 4, wobei alle übrigen Reste bevorzugt wie in Formel VI) ausgeführt sind.

Hierbei kann in der erfindungsgemäßen Kautschukmischung auch ein Gemisch an Silan-Molekülen mit unterschiedlichen Werten für n enthalten sein. Zum Beispiel kann die Kautschukmischung ein Gemisch aus den Silanen mit n = 2 und/oder n = 3 und n = 4 aufweisen.

Ein derartiges Silan mit 64 Mol-% S₄-Anteil (mit < 5 Mol-% Sₓ, wobei x in diesem Fall > 4 ist) und 36 Mol-% S₂-Anteil kann beispielsweise durch Reaktion von 3-Aminopropyltriethoxysilan mit 2-Chlorethylisocyanat in Ethanol und anschließender Umsetzung mit Natriumpolysulfid (Na₂S₄) erhalten werden.

Gemäß einer weiteren bevorzugten Ausführungsform der Erfindung ist n = 1 und m = 2, sodass ein Monosulfansilan vorliegt.

Alle anderen Reste sind bevorzugt wie in Formel VI) ausgeführt, d.h. R¹ = Ethoxy (EtO) und X = 1-Ethyl-3-Propyl-Harnstoff-Rest.

Dieses Silan kann durch Reaktion von 3-Aminopropyltriethoxysilan mit 2-Chlorethylisocyanat in Ethanol und anschließender Umsetzung mit Natriumsulfid (Na₂S) erhalten werden.

Überraschenderweise zeigt sich auch mit einem Monosulfan (mit n = 1 und m = 2) im Vergleich zu einem nicht an Polymere anbindenden Silan aus dem Stand der Technik eine Erhöhung der Steifigkeit bei gleichbleibenden oder sogar verbesserten Indikatoren für Rollwiderstand und Nassgriff. Zusätzlich zeigt sich eine Verbesserung der Abriebresistenz.

Gemäß einer weiteren Ausführungsform ist das Silan gemäß Formel I) ein Mercaptosilan. Hierbei ist m = 1, und R² = H, und n = 1.

X ist auch hier bevorzugt ein 1-Ethyl-3-Propyl-Harnstoff-Rest, wobei sich zwischen dem ersten Stickstoffatom der Harnstoff-Funktionalität und dem Si-Atom die Propyl-Gruppe befindet und zwischen dem zweiten Stickstoffatom der Harnstoff-Funktionalität und dem S-Atom die Ethyl-Gruppe. Dieses Silan kann durch Reaktion von NaSH in Ethanol (durch Einleiten von H₂S in eine Natriumethanolat-Lösung hergestellt aus Natrium und Ethanol) mit dem Halogensilan (EtO)₃Si-CH₂CH₂CH₂-NH-CO-NH-CH₂CH₂-Cl in Ethanol erhalten werden.

Gemäß einer weiteren Ausführungsform ist das Silan gemäß Formel I) ein geblocktes Mercaptosilan. Hierbei ist m = 1, und R² = eine Acylgruppe mit 1 bis 20 Kohlenstoffatomen (Alkanoyl-Rest), bevorzugt ein Acetyl-Rest (-CO-CH3), und n = 1.

X ist auch hier bevorzugt ein 1-Ethyl-3-Propyl-Harnstoff-Rest, wobei sich zwischen dem ersten Stickstoffatom der Harnstoff-Funktionalität und dem Si-Atom die Propyl-Gruppe befindet und zwischen dem zweiten Stickstoffatom der Harnstoff-Funktionalität und dem S-Atom die Ethyl-Gruppe. Dieses Silan kann durch Reaktion von

3-Aminopropyltriethoxysilan mit 2-Chlorethylisocyanat in Ethanol und anschließender Umsetzung mit Kaliumthioacetat erhalten werden.

Die erfindungsgemäße Kautschukmischung kann neben Kieselsäure noch weitere bekannte polare und/oder unpolare Füllstoffe, wie z.B. Ruß, enthalten.

Enthält die erfindungsgemäße Kautschukmischung Ruß, wird bevorzugt ein Ruß eingesetzt, der eine Jodadsorptionszahl gemäß ASTM D 1510 von 30 g/kg bis 250 g/kg, bevorzugt 30 bis 180 g/kg, besonders bevorzugt 40 bis 180 g/kg, und ganz besonders bevorzugt 40 bis 130 g/kg, und eine DBP-Zahl gemäß ASTM D 2414 von 60 bis 200 ml/100 g, bevorzugt 70 bis 200 ml/100g, besonders bevorzugt 90 bis 150 ml/100g, aufweist.

Die Menge an Ruß in der erfindungsgemäßen Kautschukmischung beträgt bevorzugt 0 bis 50 phr, besonders bevorzugt 0 bis 20 phr und ganz besonders bevorzugt 0 bis 7 phr, in einer bevorzugten Ausführungsform wenigstens aber 0,1 phr.

In einer weiteren bevorzugten Ausführungsform der Erfindung enthält die Kautschukmischung 0 bis 0,5 phr Ruß.

Weiterhin ist es denkbar, dass die Kautschukmischung Kohlenstoffnanoröhrchen (carbon nanotubes (CNT) inklusive diskreter CNTs, sogenannten hollow carbon fibers (HCF) und modifizierter CNT enthaltend eine oder mehrere funktionelle Gruppen, wie Hydroxy-, Carboxy und Carbonyl-Gruppen) enthält.

Auch Graphit und Graphene sowie sogenannte "carbon-silica dual-phase filler" sind als Füllstoff denkbar.

Die Kautschukmischung kann außerdem noch andere polare Füllstoffe, wie beispielsweise Alumosilicate, Kreide, Stärke, Magnesiumoxid, Titandioxid oder Kautschukgele enthalten.

Es können in der Kautschukmischung 0 bis 100 phr, bevorzugt 0,1 bis 80 phr, besonders bevorzugt 0,1 bis 70 phr und ganz besonders bevorzugt 0,1 bis 50 phr, zumindest eines Weichmachers vorhanden sein. Hierzu gehören alle dem Fachmann bekannten Weichmacher wie aromatische, naphthenische oder paraffinische Mineralölweichmacher, wie z.B. MES (mild extraction solvate) oder TDAE (treated distillate aromatic extract), oder Rubber-to-Liquid-Öle (RTL) oder Biomass-to-Liquid-Öle (BTL) oder Faktisse oder Weichmacherharze oder Flüssig-Polymere (wie Flüssig-BR), deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern.

Mineralöle sind als Weichmacher besonders bevorzugt.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Tnmethyl-1,2-dihydrochinolin (TMQ),
b) Aktivatoren, wie z. B. Zinkoxid und Fettsäuren (z. B. Stearinsäure),
c) Wachse,
d) Harze, insbesondere Klebharze, bei denen es sich nicht um Weichmacherharze handelt,
e) Mastikationshilfsmittel, wie z. B. 2,2'-Dibenzamidodiphenyldisulfid (DBD) und
f) Verarbeitungshilfsmittel, wie z.B. Fettsäuresalze, wie z.B. Zinkseifen, und Fettsäureester und deren Derivate.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Der Mengenanteil der Gesamtmenge an weiteren Zusatzstoffen beträgt 3 bis 150 phr, bevorzugt 3 bis 100 phr und besonders bevorzugt 5 bis 80 phr.

Im Gesamtmengenanteil der weiteren Zusatzstoffe finden sich noch 0,1 bis 10 phr, bevorzugt 0,2 bis 8 phr, besonders bevorzugt 0,2 bis 4 phr, Zinkoxid (ZnO).

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch so genanntes nano-Zinkoxid mit einer BET-Oberfläche von 10 bis 60 m²/g verwendet werden. Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Vulkanisation wird in Anwesenheit von Schwefel oder Schwefelspendern mit Hilfe von Vulkanisationsbeschleunigern durchgeführt, wobei einige

Vulkanisationsbeschleuniger zugleich als Schwefelspender wirken können. Schwefel oder Schwefelspender sowie ein oder mehrere Beschleuniger werden im letzten Mischungsschritt in den genannten Mengen der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.

DipDis (Bis-(Diisopropyl)thiophosphoryldisulfid) und/oder Bis(O,O-2-ethylhexylthiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger. Das Vulkanisationsmittel, welches mit einer Funktionalität von größer vier vernetzt hat beispielsweise die allgemeine Formel A):

A) G[CₐH₂ₐ-CH₂-S_{b}Y]_{c}

wobei G eine polyvalente cyclische Kohlenwasserstoffgruppe und/oder eine polyvalente Heterokohlenwasserstoffgruppe und/oder eine polyvalente Siloxangruppe ist, die 1 bis 100 Atome enthält; wobei jedes Y unabhängig ausgewählt aus einer kautschukaktiven Gruppe, Schwefel-enthaltende Funktionalitäten enthält; und wobei a, b und c ganze Zahlen sind, für die unabhängig gilt: a gleich 0 bis 6; b gleich 0 bis 8; und c gleich 3 bis 5.

Die kautschukaktive Gruppe ist bevorzugt ausgewählt ist aus einer Thiosulfonatgruppe, einer Dithiocarbamatgruppe, einer Thiocarbonylgruppe, einer Mercaptogruppe, einer Kohlenwasserstoffgruppe und einer Natriumthiosulfonatgruppe (Bunte-Salzgruppe). Hiermit werden sehr gute Abrieb- und Reißeigenschaften der erfindungsgemäßen Kautschukmischung erzielt.

Im Rahmen der vorliegenden Erfindung werden Schwefel und Schwefelspender, inklusive schwefelspendende Silane wie TESPT, und Vulkanisationsbeschleuniger wie oben beschrieben und Vulkanisationsmittel, die mit einer Funktionalität größer vier vernetzen, wie in der WO 2010/049216 A2 beschrieben, wie z.B. ein Vulkanisationsmittel der Formel A), sowie die oben genannten Systeme Vulkuren^{®}, Duralink^{®} und Perkalink^{®} begrifflich als Vulkanisationsmittel zusammengefasst.

Die erfindungsgemäße Kautschukmischung enthält bevorzugt wenigstens ein Vulkanisationsmittel ausgewählt aus der Gruppe enthaltend Schwefel und/oder Schwefelspender und/oder Vulkanisationsbeschleuniger und/oder Vulkanisationsmittel, die mit einer Funktionalität größer vier vernetzen. Hierdurch lassen sich aus der erfindungsgemäßen Kautschukmischung Vulkanisate, insbesondere für die Anwendung im Fahrzeugreifen, herstellen.

Gemäß einer bevorzugten Weiterbildung der Erfindung sind mehrere Beschleuniger in der Kautschukmischung enthalten.

Besonders bevorzugt ist die Verwendung der Beschleuniger TBBS und/oder CBS und/oder Diphenylguanidin (DPG).

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Bevorzugt wird die erfindungsgemäße Kautschukmischung im Laufstreifen von Fahrzeugreifen eingesetzt. Wie dem Fachmann bekannt ist, trägt der Laufstreifen in hohem Maß zum Handling-Verhalten von Fahrzeugreifen bei. Besonders bevorzugt handelt es sich bei dem Fahrzeugreifen um einen Fahrzeugluftreifen. Die erfindungsgemäße Kautschukmischung ist aber auch für andere Bauteile von Fahrzeugreifen, wie der Seitenwand und/oder dem Hornprofil und/oder inneren Bauteilen, den sogenannten Body-Bauteilen, wie z.B. als Karkassgummierung und/oder Gürtelgummierung, geeignet.

Eine weitere Aufgabe der vorliegenden Erfindung besteht darin, einen Fahrzeugreifen bereitzustellen, der sich durch ein verbessertes Handling-Verhalten bei gleichbleibendem Zielkonflikt aus Rollwiderstand versus Nassgriffeigenschaften auszeichnet. Gelöst wird diese Aufgabe dadurch, dass der Fahrzeugreifen in wenigstens einem Bauteil die erfindungsgemäße Kautschukmischung wie oben beschrieben enthält. Dabei gelten alle oben genannten Ausführungen zu den Bestandteilen und deren Merkmale.

Bevorzugt handelt es sich bei dem Bauteil um einen Laufstreifen. Wie dem Fachmann bekannt ist, trägt der Laufstreifen in hohem Maß zum Handling-Verhalten von Fahrzeugreifen bei. Besonders bevorzugt handelt es sich bei dem Fahrzeugreifen um einen Fahrzeugluftreifen.

Die erfindungsgemäße Kautschukmischung ist aber auch für andere Bauteile von Fahrzeugreifen, wie der Seitenwand und/oder inneren Bauteilen, den sogenannten Body-Bauteilen geeignet.

Eine weitere Aufgabe der vorliegenden Erfindung besteht, darin, das Handling-Verhalten bei gleichbleibendem Zielkonflikt aus Rollwiderstand versus Nassgriffeigenschaften von Fahrzeugreifen zu verbessern. Gelöst wird diese Aufgabe erfindungsgemäß durch die Verwendung der oben beschriebenen Kautschukmischung mit allen oben genannten Ausführungsformen und Merkmalen in Fahrzeugreifen.

Die Kautschukmischung ist weiterhin zur Herstellung von technischen Kautschukartikeln wie z.B. Transportbändern, Riemen, Gurten, Schläuchen, Drucktüchern, Luftfedern oder Dämpfungselementen, oder Schuhsohlen geeignet.

Die Erfindung soll nun anhand von Vergleichs- und Ausführungsbeispielen, die in den Tabellen 1 bis 4 zusammengefasst sind, näher erläutert werden.

Die Vergleichsmischungen sind mit V, die erfindungsgemäßen Mischungen sind mit E gekennzeichnet.

Die Mischungsherstellung erfolgte nach dem in der Kautschukindustrie üblichen Verfahren unter üblichen Bedingungen in zwei Stufen in einem Labormischer mit 300 Milliliter bis 3 Liter Volumen, bei dem zunächst in der ersten Mischstufe (Grundmischstufe) alle Bestandteile außer dem Vulkanisationssystem (Schwefel und vulkanisationsbeeinflussende Substanzen) für 200 bis 600 Sekunden bei 145 bis 165 °C, Zieltemperaturen von 152 bis 157 °C, vermischt wurden. Durch Zugabe des Vulkanisationssystems in der zweiten Stufe (Fertigmischstufe) wurde die Fertigmischung erzeugt, wobei für 180 bis 300 Sekunden bei 90 bis 120 °C gemischt wurde.

Das allgemeine Verfahren zur Herstellung von Kautschukmischungen und deren Vulkanisate ist in "Rubber Technology Handbook", W. Hofmann, Hanser Verlag 1994 beschrieben.

Aus sämtlichen Mischungen wurden Prüfkörper durch Vulkanisation nach t₉₅ (gemessen am Moving Disc Rheometer gemäß ASTM D 5289-12/ ISO 6502) unter Druck bei 160°C hergestellt und mit diesen Prüfkörpern für die Kautschukindustrie typische Materialeigenschaften mit den im Folgenden angegebenen Testverfahren ermittelt.
- Umsatzzeit von 90% Umsatz (t₉₀, Ausvulkanisationszeit) mittels rotorlosem Vulkameter (MDR = Moving Disc Rheometer) gemäß ASTM D 5289-12 /ISO 6502
- Shore-A-Härte bei Raumtemperatur (RT) gemäß DIN ISO 7619-1
- Rückprallelastizität bei RT und 70 °C gemäß DIN 53 512
- dynamischer Speichermodul E' bei 55 °C gemäß ISO 4664-1 bei 0,15 % Dehnung und bei 8% Dehnung
- maximaler Verlustfaktor tan d (max), synonym zu tan δ (max), bei 55°C aus dynamisch-mechanischer Messung gemäß ISO 4664-1
- Abrieb bei Raumtemperatur gemäß DIN53 516 bzw. DIN/ISO 4649
- Zugfestigkeit und Spannungswert bei 100% (Modul 100) sowie 300% statischer Dehnung (Modul 300) bei Raumtemperatur gemäß DIN 53 504

### Verwendete Substanzen

^{a)} BR: Polybutadien, Hoch-cis Nd-BR, unfunktionalisiert, T_{g} = -105 °C, BUNA^{®} CB25, Fa. Lanxess
^{b)} SSBR: Sprintan^{®} SLR-4601, Fa. Styron
^{c)} Kieselsäure: ULTRASIL^{®} VN3, Fa. Evonik
^{d)} Silan mit 75 Gew.-% S₂-Anteil, Si261^{®}, Fa. Evonik
^{e)} Silan gemäß Struktur VI) mit polarem organischem harnstoffhaltigem Spacer: 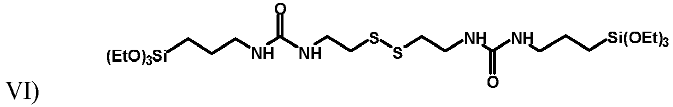 Hierbei ist gemäß Formel VI): n = 2; R¹ = (EtO); X = 1-Ethyl-3-Propyl-Harnstoff, m = 2; hergestellt durch unten genanntes Verfahren E)
^{f)} Beschleuniger: DPG (Diphenylguanidin) und CBS (N-Cyclohexyl-2-benzothiazolsufenamid)
^{g)} Silan Si263 ^{®}, Fa. Evonik; Mercaptosilan aus dem Stand der Technik: 3-Mercaptopropyltriethoxysilan
^{h)} Silan gemäß Formel I) mit n = 1; R¹ = (EtO); X = 1-Ethyl-3-Propyl-Harnstoff, m = 1; R² = H (Mercaptosilan); hergestellt durch unten genanntes Verfahren H). 88 % Reinheit im Gemisch mit S₁-Silan gemäß Silan ⁿ⁾ (s. unten, n = 1; R¹ = (EtO); X = 1-Ethyl-3-Propyl-Harnstoff ; m = 2) und S₂-Silan gemäß Silan ^{e)} (s. oben, n = 2; R¹ = (EtO); X = 1-Ethyl-3-Propyl-Harnstoff; m = 2); Verhältnis von SH zu S₁ zu S₂ = 88:7:5 gemäß ¹³C-NMR (CDCl₃)-Analyse
ⁱ⁾ Silan NXT, Fa. Momentive Performance Materials Inc.; geblocktes Mercaptosilan aus dem Stand der Technik; 3-Octanoylthio-1-propyltriethoxysilan
^{j)} Silan gemäß Formel I) mit n = 1; R¹ = (EtO); X = 1-Ethyl-3-Propyl-Harnstoff ; m = 1; R² = Acetyl; S-(4,4-Diethoxy-9-oxo-3-oxa-8,10-diaza-4-siladodecan-12-yl)ethanethioat (geblocktes Mercaptosilan); hergestellt durch unten genanntes Verfahren J); 87 % Reinheit gemäß ¹H-NMR (CDCl₃)-Analyse: durchschnittlicher Integralwert von -CH₂NH- gegen Gesamtintegralwert von Si-CH₂
^{k)} Polysulfansilan aus dem Stand der Technik, Si69^{®}, Fa. Evonik
^{l)} Silan gemäß Formel I) mit n = 4; R¹ = (EtO); X = 1-Ethyl-3-Propyl-Harnstoff; m = 2 (Polysulfansilan); hergestellt durch unten genanntes Verfahren L), die in der Tabelle angegebene Menge bezieht sich auf Gemisch: 64 Mol % S₄-Anteil (davon < 5 Mol-% Sₓ, wobei x an dieser Stelle > 4 ist) und 36 Mol-% S₂-Anteil (Silan ^{e)} gemäß Formel VI, s. oben)
^{m)} Silan Octyl Si208^{®}, Fa. Evonik, Silan aus dem Stand der Technik ohne S-Atome, Octyltriethoxysilane
ⁿ⁾ Silan gemäß Formel I) mit n = 1; R¹ = (EtO); X = l-Ethyl-3-Propyl-Harnstoff; m = 2; hergestellt durch unten genanntes Verfahren N); 87 % Reinheit gemäß ¹H-NMR (CDCl₃)-Analyse: durchschnittlicher Integralwert von -CH2NH- gegen Gesamtintegralwert von Si-CH₂
^{o)} BR: Polybutadien: Europrene Neocis BR 40, Fa. Polimeri
^{p)} NR TSR: SIR 20 SED, Fa. Aneka Bumi Pratama (TSR = Technically Specified Rubber; SIR = Standard Indonesian Rubber)

### Herstellung der Silane

### E) Herstellung des Silans e) [(EtO)₃Si-(CH₂)₃-NH-C(=O)-NH-(CH₂)₂-S-]₂ in Wasser (ohne Hexan-Waschung):

In einem mit N₂ gespülten 1L Doppelmantel-Vierhalskolben mit KPG-Rührer, Rückflusskühler, Innenthermometer und Tropftrichter wird Cystamindihydrochlorid (108,39 g, 0,47 mol, 1.00 eq) vorgelegt und in VE-Wasser (382 mL) gelöst. Mittels Tropftrichter wird 50%ige KOH-Lösung (92,31 g, 0,82 mol, 1,75 eq) bei 15-23°C zudosiert und für 30 min gerührt. Nun wird 3-Isocyanatopropyltriethoxysilan (221,05 g, 0,85 mol, 1,8 eq) so zudosiert, dass eine Innentemperatur von 30°C nicht überschritten wird. Danach wird eine Stunde bei 24°C gerührt. Die weiße Suspension wird über Druck filtriert, mit drei Portionen VE-Wasser (340 mL gesamt) gespült und mit trockenem N₂ für 2 h getrocknet. Der Filterkuchen wird im Rotationsverdampfer für 7 h bei 35°C und 166 mbar, für 10 h bei 35°C und 150 mbar und für 9 h bei 35°C und 100 mbar im N₂-Strom getrocknet.

Das Produkt [(EtO)₃Si-(CH₂)₃-NH-C(=O)-NH-(CH₂)₂-S-]₂ ist ein feines, weißes Pulver (246,38 g, 90,7% d.Th. = der Theorie; Theorie entspricht maximal möglicher

### Ausbeute);

¹H-NMR (δₚₚₘ, 500 MHz, DMSO-d6): 0.52 (4H, t), 1.14 (18H, t), 1.42 (4H, m), 2.74 (4H, m), 2.96 (4H, m), 3.29 (4H, m), 3.74 (12H, q), 6.05 (4H, m);

¹³C-NMR (δₚₚₘ, 125 MHz, DMSO-d6): 7.3 (2C), 18.2 (6C), 23.5 (2C), 38.5 (2C), 39.6 (2C), 42.0 (2C), 57.7 (6C) 157.9 (2C).

²⁹Si-NMR (δₚₚₘ, 100 MHz, DMSO-d6): -45.3 (100% Silan);

lösliche Anteile in d6-DMSO unter Verwendung von internem Standard TPPO: 86,0%;

| | |
|---|---|
| Wassergehalt (DIN 51777): | 0,7%; |
| Schmelzbeginn: | 97°C; |
| Restgehalt Isocyanat: | 0,08% |

### H) Herstellung des Silans h) (EtO)₃Si-CH₂CH₂CH₂-NH-CO-NH-CH₂CH₂-SH aus (EtO)₃Si-CH₂CH₂CH₂-NH-CO-NH-CH₂CH₂-Cl und NaSH

Zu einer Lösung aus NaSH in Ethanol [hergestellt durch Einleiten von H₂S (15,21 g, 0,45 mol, 1,07 eq) in eine Natriumethanolat-Lösung (hergestellt aus Na (10,55 g, 0,46 mol, 1,10 eq) in EtOH (300 mL))] wird bei 52°C (EtO)₃Si-CH₂CH₂CH₂-NH-CO-NH-CH₂CH₂-Cl (138,90 g, 0,42 mol, 1,00 eq) in Ethanol (300 mL) zudosiert und auf 78°C erwärmt. Nach einer Reaktionszeit von 5 h wird auf Raumtemperatur gekühlt und die Suspension filtriert. Das Filtrat wird am Rotationsverdampfer vom Lösungsmittel befreit und am Vakuum getrocknet. Man erhält das Produkt (EtO)₃Si-CH₂CH₂CH₂-NH-CO-NH-CH₂CH₂-SH (134,96 g, 97,9% d.Th.) als weißen Feststoff.

¹H-NMR (δₚₚₘ, 500 MHz, CDCl₃): 0.64 (2H, t), 1.23 (9H, t), 1.36 (1H, br), 1.61 (2H, m), 2.67 (2H, t), 3.17 (2H, m), 3.37 (2H, m), 3.81 (6H, q), 4.74 (1H, br), 4.94 (1H, br);

¹³C-NMR (δₚₚₘ, 125 MHz, CDCl₃): 7.8 (1C), 18.3 (3C), 23.8 (1C), 25.6 (1C), 43.0 (1C), 43.5 (1C), 58.4 (3C), 158.9 (1C).

### J) Herstellung des Silans j) (EtO)₃Si-CH₂CH₂CH₂-NH-CO-NH-CH₂CH₂-S-CO-CH₃ aus (EtO)₃Si-CH₂CH₂CH₂-NH₂, OCN-CH₂CH₂-Cl und KSAc:

3-Aminopropyltriethoxysilan (132,82 g, 0,60 mol, 1,00 eq) wird in Ethanol (300 mL) in einem Dreihalskolben mit KPG-Rührer, Innenthermometer, Tropftrichter und Rückflusskühler vorgelegt und auf -78°C gekühlt. 2-Chlorethylisocyanat (63,34 g, 0,60 mol, 1,00 eq) wird innerhalb von 1,75 h bei -78 bis -68°C zugetropft und danach auf 50°C erwärmt. Kaliumthioacetat (68,53 g, 0,60 mol, 1,00 eq) wird in fünf Portionen zugegeben und die Mischung zum Rückfluss erhitzt. Nach einer Reaktionszeit von 2,25 h wird auf Raumtemperatur gekühlt und die Suspension filtriert. Das Filtrat wird am Rotationsverdampfer vom Lösungsmittel befreit und am Vakuum getrocknet. Man erhält das Produkt (EtO)₃Si-CH₂CH₂CH₂-NH-CO-NH-CH₂CH₂-S-CH₃ (213,91 g, 97,3% d.Th. = der Theorie; Theorie entspricht maximal möglicher Ausbeute) als wachsartigen, weißen Feststoff.

¹H-NMR (δₚₚₘ, 500 MHz, CDCl₃): 0.64 (2H, t), 1.22 (9H, t), 1.62 (2H, m), 2.35 (3H, s), 3.01 (2H, t), 3.16 (2H, t), 3.34 (2H, t), 3.82 (6H, q), 4.7-5.0 (2H, br);

¹³C-NMR (δₚₚₘ, 125 MHz, CDCl₃): 7.8 (1C), 18.3 (3C), 23.8 (1C), 29.9 (1C), 30.6 (1C), 40.1 (1C), 43.0 (1C), 58.4 (3C), 158.7 (1C), 195.9 (1C).

### L) Herstellung des Silans 1) (EtO)₃Si-CH₂CH₂CH₂-NH-CO-NH-CH₂CH₂-S₄-CH₂CH₂-NH-CO-NH-CH₂CH₂CH₂-Si(OEt)₃ aus (EtO)₃Si-CH₂CH₂CH₂-NH₂, OCN-CH₂CH₂-Cl und Na₂S₄:

In einem ersten Reaktionsschritt wird 3-Aminopropyltriethoxysilan (154,95 g, 0,70 mol, 1,00 eq) in Ethanol (3,0 L) in einem 4 L Dreihalskolben mit KPG-Rührer, Innenthermometer, Tropftrichter und Rückflusskühler vorgelegt und auf -78°C gekühlt. 2-Chlorethylisocyanat (73,86 g, 0,70 mol, 1,00 eq) wird innerhalb von 1 h bei -78 bis -60°C zugetropft, wobei ein voluminöses Salz ausfällt. Danach wird auf 50°C erhitzt, gemörsertes Natriumpolysulfid (Na₂S₄, 57,62 g, 0,35 mol, 1,00 eq) portionsweise zugegeben und die Mischung zum Rückfluss erhitzt. Nach einer Reaktionszeit von 4,5 h wird auf Raumtemperatur gekühlt und die Suspension filtriert. Das Filtrat wird am Rotationsverdampfer vom Lösungsmittel befreit und am Vakuum getrocknet. Man erhält das Produkt (EtO)₃Si-CH₂CH₂CH₂-NH-CO-NH-CH₂CH₂-S₄-CH₂CH₂-NH-CO-NH-CH₂CH₂CH₂-Si(OEt)₃ (155,05 g, Ausbeute 63,1% d.Th.) als orangenen Feststoff.

¹H-NMR (δₚₚₘ, 500 MHz, d6-Tol): 0.7 (4H, t), 1.21 (18H, t), 1.75 (4H, m), 2.65 (4H · 2S-Anteil, t), 2.89 (4H · S4-Anteil, t), 3.25-3.35 (4H, 2S/4S, m), 3.40-3.60 (4H, 2S/4S, m), 3.81 (12H, q), 5.5-6.0 (4H, br);

S₄-Anteil in der Produktmischung (enthält Sₓ-Anteil ca. <5%): 64,0 Mol-%

| | |
|---|---|
| S₂-Anteil in der Produktmischung : | 36,0 Mol-%; |
| Schmelzbeginn: | 78-91°C. |

### N) Herstelllung des Silans n) (EtO)₃Si-CH₂CH₂CH₂-NH-CO-NH-CH₂CH₂-S-CH₂CH₂-NH-CO-NH-CH₂CH₂CH₂-Si(OEt)₃ aus (EtO)₃Si-CH₂CH₂CH₂-NH₂, OCN-CH₂CH₂-Cl und Na₂S:

In einem ersten Reaktionsschritt wird 3-Aminopropyltriethoxysilan (159,39 g, 0,72 mol, 1,00 eq) in Ethanol (3,0 L) in einem 4 L Dreihalskolben mit KPG-Rührer, Innenthermometer, Tropftrichter und Rückflusskühler vorgelegt und auf -78°C gekühlt. 2-Chlorethylisocyanat (75,92 g, 0,72 mol, 1,00 eq) wird innerhalb von 2,25 h bei -78 bis -69°C zugetropft und danach auf 50°C erwärmt. Trockenes Natriumsulfid (Na₂S, 28,09 g, 0,36 mol, 0,50 eq) wird in fünf Portionen zugegeben und die Mischung zum Rückfluss erhitzt. Nach einer Reaktionszeit von 4,5 h wird auf Raumtemperatur gekühlt und die Suspension filtriert. Das Filtrat wird am Rotationsverdampfer vom Lösungsmittel befreit und am Vakuum getrocknet. Man erhält das Produkt (EtO)₃SiCH₂CH₂CH₂-NH-CO-NH-CH₂CH₂-S-CH₂CH₂-NH-CO-NH-CH₂CH₂CH₂-Si(OEt)₃ (214,09 g, Ausbeute 96,7% d.Th.) als wachsartigen, weißen Feststoff.

¹H-NMR (δₚₚₘ, 500 MHz, CDCl₃): 0.64 (4H, t), 1.22 (18H, t), 1.61 (4H, m), 2.67 (4H, t), 3.15 (4H, m), 3.40 (4H, m), 3.82 (12H, q), 5.16 (2H, br), 5.43 (2H, br);

¹³C-NMR (δₚₚₘ, 125 MHz, CDCl₃): 7.8 (2C), 18.3 (6C), 23.8 (2C), 33.0 (2C), 40.3 (2C), 42.9 (2C), 58.4 (6C), 159.3 (2C).

**Tabelle 1**

| **Bestandteile** | **Einheit** | **V1** | **E1** | **E2** | **V2** | **E3** |
|---|---|---|---|---|---|---|
| NR TSR ^{p)} | phr | 20 | 20 | 20 | 30 | 30 |
| BR ^{a)} | phr | 44 | 44 | 44 | - | - |
| SSBR ^{b)} | phr | 36 | 36 | 36 | 70 | 70 |
| Kieselsäure ^{c)} | phr | 95 | 95 | 95 | 86 | 86 |
| Silan ^{d)} | phf | 7,2 | - | - | 7,2 | - |
| Silan ^{e)} | phf | - | 9,8 | 11,2 | - | 9,8 |
| Ruß N339 | phr | - | - | - | 5 | 5 |
| Weichmacher | phr | 45 | 45 | 45 | 24 | 24 |
| Alterungsschutzm. | phr | 4 | 4 | 4 | 4 | 4 |
| Prozesshilfsmittel | phr | - | - | - | 4 | 4 |
| Stearinsäure | phr | 2,5 | 2,5 | 2,5 | 1 | 1 |
| ZnO | phr | 2,5 | 2,5 | 2,5 | 2 | 2 |
| Beschleuniger ^{f)} | phr | 3,6 | 3,6 | 3,6 | 4 | 4 |
| Schwefel | phr | 2 | 2 | 2 | 1,7 | 1,7 |

| **Physikalische Eigenschaften** | | | | | | |
|---|---|---|---|---|---|---|
| t₉₀ | min | 14 | 10 | 6 | 12 | 5 |
| Shore Härte b. RT | Shore A | 66 | 73 | 76 | 69 | 78 |
| Rückprallelast. b. RT | % | 31 | 32 | 33 | 24 | 25 |
| Rückprallelast. b. 70 °C | % | 40 | 39 | 42 | 42 | 42 |
| Zugfestigkeit | MPa | 13 | 13 | 15 | 15 | 17 |
| Modul 100 | MPa | 1,9 | 2,6 | 3,0 | 1,9 | 2,9 |
| Modul 300 | MPa | 5,9 | 8,0 | 9,2 | 6,8 | 10,2 |
| E' (0,15%) | MPa | 11,2 | 18,0 | 19,2 | 14,0 | 19,7 |
| E' (8%) | MPa | 4,6 | 7,5 | 8,2 | 5,1 | 6,9 |
| Tan δ (max) bei 55 °C | | 0,222 | 0,214 | 0,207 | 0,234 | 0,226 |

**Tabelle 2**

| **Bestandteile** | **Einheit** | **V3** | **V4** | **E4** | **E5** | **V5** | **E6** |
|---|---|---|---|---|---|---|---|
| NR TSR ^{p)} | phr | 10 | 10 | 10 | 10 | 10 | 10 |
| BR ^{o)} | phr | 18 | 18 | 18 | 18 | 18 | 18 |
| SSBR ^{b)} | phr | 72 | 72 | 72 | 72 | 72 | 72 |
| Kieselsäure ^{c)} | phr | 95 | 95 | 95 | 95 | 95 | 95 |
| Mercapto-Silan ^{g)} | phf | 6,1 | 9,4 | - | - | - | - |
| Mercapto-Silan ^{h)} | phf | - | - | 8,4 | 12,8 | - | - |
| gebl. Mercapto-Silan ⁱ⁾ | phf | - | - | - | - | 13,3 | - |
| gebl. Mercapto-Silan ^{j)} | phf | - | - | - | - | - | 15,0 |
| Weichmacher TDAE | phr | 50 | 50 | 50 | 50 | 50 | 50 |
| Alterungsschutzm. | phr | 4 | 4 | 4 | 4 | 4 | 4 |
| Stearinsäure | phr | 2,5 | 2,5 | 2,5 | 2,5 | 2,5 | 2,5 |
| ZnO | phr | 2,5 | 2,5 | 2,5 | 2,5 | 2,5 | 2,5 |
| Beschleuniger ^{f)} | phr | 4 | 4 | 4 | 4 | 4 | 4 |
| Schwefel | phr | 2 | 2 | 2 | 2 | 2 | 2 |

| **Physikalische Eigenschaften** | | | | | | | |
|---|---|---|---|---|---|---|---|
| t₉₀ | min | 12 | 12 | 13 | 12 | 12 | 4 |
| Shore Härte b. RT | Shore A | 65 | 63 | 67 | 64 | 63 | 73 |
| Rückprallelast. b. RT | % | 27 | 28 | 27 | 29 | 30 | 26 |
| Rückprallelast. b. 70 °C | % | 45 | 48 | 48 | 48 | 50 | 42 |
| Zugfestigkeit | MPa | 11 | 10 | 12 | 11 | 10 | 13 |
| Modul 100 | MPa | 2,2 | 2,4 | 2,7 | 2,7 | 2,3 | 2,6 |
| Modul 300 | MPa | 7,2 | 8,1 | 8,6 | 8,6 | 6,2 | 6,9 |
| E' (0,15%) | MPa | 9,2 | 8,6 | 10,8 | 10,1 | 8,6 | 16,5 |
| E' (8%) | MPa | 5,6 | 5,6 | 6,0 | 6,0 | 4,9 | 7,1 |

**Tabelle 3**

| **Bestandteile** | **Einheit** | **V7** | **V8** | **E8** | **E9** |
|---|---|---|---|---|---|
| NR TSR ^{p)} | phr | 10 | 10 | 10 | 10 |
| BR ^{o)} | phr | 18 | 18 | 18 | 18 |
| SSBR ^{b)} | phr | 72 | 72 | 72 | 72 |
| Kieselsäure ^{c)} | phr | 95 | 95 | 95 | 95 |
| Polysulfan-Silan ^{k)} | phf | 8,0 | 9,88 | - | - |
| Polysulfan-Silan ^{l)} | phf | - | - | 10,4 | 12,71 |
| Weichmacher TDAE | phr | 50 | 50 | 50 | 50 |
| Alterungsschutzm. | phr | 4 | 4 | 4 | 4 |
| Stearinsäure | phr | 2,5 | 2,5 | 2,5 | 2,5 |
| ZnO | phr | 2,5 | 2,5 | 2,5 | 2,5 |
| Beschleuniger ^{f)} | phr | 4 | 4 | 4 | 4 |
| Schwefel | phr | 2 | 2 | 2 | 2 |

| **Physikalische Eigenschaften** | | | | | |
|---|---|---|---|---|---|
| t₉₀ | min | 18 | 15 | 12 | 9 |
| Shore Härte b. RT | Shore A | 65 | 70 | 67 | 72 |
| Rückprallelast. b. RT | % | 27 | 28 | 27 | 27 |
| Rückprallelast. b. 70 °C | % | 50 | 53 | 50 | 51 |
| Zugfestigkeit | MPa | 14 | 14 | 14 | 14 |
| Modul 100 | MPa | 2,4 | 3,2 | 2,8 | 3,3 |
| Modul 300 | MPa | 8,9 | 10,2 | 9,6 | 10,8 |
| E' (0,15%) | MPa | 7,7 | 10,5 | 11,3 | 12,8 |
| E' (8%) | MPa | 4,7 | 6,3 | 6,0 | 6,9 |

**Tabelle 4**

| **Bestandteile** | **Einheit** | **V9** | **V10** | **E10** | **E11** |
|---|---|---|---|---|---|
| NR TSR ^{p)} | phr | 10 | 10 | 10 | 10 |
| BR ^{o)} | phr | 18 | 18 | 18 | 18 |
| SSBR ^{b)} | phr | 72 | 72 | 72 | 72 |
| Kieselsäure ^{c)} | phr | 95 | 95 | 95 | 95 |
| Silan ohne S ^{m)} | phf | 6,1 | 9,4 | - | - |
| Monosulfan-Silan ⁿ⁾ | phf | - | - | 7,9 | 12,1 |
| Weichmacher TDAE | phr | 50 | 50 | 50 | 50 |
| Alterungsschutzm. | phr | 4 | 4 | 4 | 4 |
| Stearinsäure | phr | 2,5 | 2,5 | 2,5 | 2,5 |
| ZnO | phr | 2,5 | 2,5 | 2,5 | 2,5 |
| Beschleuniger ^{f)} | phr | 4 | 4 | 4 | 4 |
| Schwefel | phr | 2 | 2 | 2 | 2 |

| **Physikalische Eigenschaften** | | | | | |
|---|---|---|---|---|---|
| t₉₀ | min | 20 | 18 | 12 | 8 |
| Shore Härte b. RT | Shore A | 49 | 50 | 62 | 68 |
| Rückprallelast. b. RT | % | 22 | 21 | 23 | 22 |
| Rückprallelast. b. 70 °C | % | 40 | 42 | 42 | 43 |
| Zugfestigkeit | MPa | 10 | 8 | 13 | 14 |
| Modul 100 | MPa | 0,8 | 0,9 | 1,6 | 2,0 |
| Modul 300 | MPa | 2,1 | 2,4 | 5,0 | 5,8 |
| E' (0,15%) | MPa | 6,4 | 7,2 | 11,2 | 21,6 |
| E' (8%) | MPa | 2,8 | 3,0 | 4,7 | 5,5 |
| Tan δ (max) bei 55 °C | | 0,236 | 0,226 | 0,217 | 0,215 |
| Abrieb | mm³ | 378 | 335 | 185 | 164 |

Wie aus Tabelle 1 anhand des Vergleiches E1 vs. V1 (molgleicher Austausch des Silans) und E2 vs. V1 sowie E3 vs. V2 zu erkennen ist, weisen die erfindungsgemäßen Kautschukmischungen eine deutlich höhere Steifigkeit auf, was sich in den erhöhten Werten Modul 100, Modul 300 sowie E' (bei 0,15 % Dehnung) und E' (bei 8 % Dehnung) zeigt. Gleichzeitig weisen die erfindungsgemäßen Kautschukmischungen eine verringerte Ausvulkanisationszeit t₉₀ und eine erhöhte Zugfestigkeit auf.

Dabei bleiben die erfindungsgemäßen Kautschukmischungen im Hinblick auf den Zielkonflikt aus Rollwiderstand und Nassgriff auf annähernd gleichem Niveau, was an den Indikatoren Rückprallelastizität bei 70 °C und tan δ (max) bei 55 °C für Rollwiderstand und Rückprallelastizität bei Raumtemperatur für Nassgriff erkennbar ist.

Hieraus ergibt sich für die Anwendung der erfindungsgemäßen Kautschukmischung in Fahrzeugreifen, insbesondere in Laufstreifen von Fahrzeugluftreifen, ein verbessertes Handling-Verhalten und eine Kostenersparnis bei der Herstellung der Reifen.

Wie aus den Tabellen 2 bis 4 erkennbar ist, zeigen alle erfindungsgemäßen Kautschukmischungen mit einem Silan gemäß Formel I) unterschiedlicher Ausführungsformen beim Vergleich mit ihren jeweiligen Vergleichsmischungen mit einem vergleichbaren Silan aus dem Stand der Technik in gleicher molarer Menge eine Erhöhung der Steifigkeit bei gleichbleibenden Indikatoren für Rollwiderstand und/oder Nassgriff. Teilweise sind diese Indikatoren sogar zusätzlich verbessert.

Anhand der Vergleiche E4 vs. V3 sowie E5 vs. V4 in Tabelle 2 ist zu erkennen, dass die erfindungsgemäßen Kautschukmischungen E4 und E5 mit einem Silan gemäß Formel I) in der Ausführungsform Mercaptosilan höhere Steifigkeiten (Modul 100; Modul 300, E' (0,15 %); E' (8%)) und Zugfestigkeiten zeigen, als Kautschukmischungen mit einem Mercaptosilan aus dem Stand der Technik. Gleichzeitig verbleiben die übrigen Eigenschaften, insbesondere die Indikatoren für den Zielkonflikt aus Nassgriff und Rollwiderstand auf gleichem Niveau oder werden sogar teilweise verbessert.

Auch der entsprechende Vergleich mit einem geblockten Mercaptosilan (Mercaptosilan mit Schutzgruppe auf dem Schwefelatom, in diesem Fall ein Acetylrest) zeigt eine deutliche Erhöhung der Steifigkeiten, wobei der Zielkonflikt aus Rollwiderstand und Nassgriff nicht signifikant beeinflusst wird, wie an dem Vergleich der Mischungen V5 (geblocktes Mercaptosilan aus dem Stand der Technik) und E6 (Silan gemäß Formel I in der Ausführung geblocktes Mercaptosilan) erkennbar ist. Auch hier wurde das Silan in der Rezeptur ausgehend von V5 molgleich (gleiche Molmenge) ausgetauscht.

Wie die Vergleiche der Mischungen E8 vs. V7 sowie E9 vs. V8 zeigen, weisen die erfindungsgemäßen Kautschukmischungen bei jeweils molgleichem Austausch eines Polysulfansilans aus dem Stand der Technik gegen ein Silan gemäß Formel I) in der Ausführungsform Polysulfansilan höhere Steifigkeiten und verringerte Ausvulkanisationszeiten t₉₀ auf.

Überraschenderweise zeigen auch die Kautschukmischungen E10 und E11 mit einem Silan gemäß Formel I) in der Ausführungsform Monosulfansilan (n=1) höhere Steifigkeiten und Zugfestigkeiten sowie verringerte Ausvulkanisationszeiten t₉₀. Als Vergleich dient in den Vergleichsmischungen V9 und V10 ein Silan (mit gleicher molarer Menge) aus dem Stand der Technik, welches aufgrund seiner Struktur nicht an Polymerketten anbindet. Erwartungsgemäß hätte das Monosulfansilan ähnliche Eigenschaften wie dieses Vergleichssilan zeigen müssen, da auch hier keine signifikante Anbindung an Polymerketten erfolgen müsste.

Zusätzlich zeigen die erfindungsgemäßen Kautschukmischungen E10 und E11 verbesserte Indikatoren für den Rollwiderstand, wie an den Rückprallelastizitäten bei 70 °C sowie an dem maximalen Verlustfaktor Tangens delta (tan δ) bei 55 °C erkennbar ist, und eine verbesserte Abriebresistenz, was an dem geringeren Materialabtrag im Abriebtest erkennbar ist. Da auch die Nassgriffindikatoren (Rückprallelastizitäten bei RT werden kleiner) mit E10 und E11 verbessert werden, liegen diese Mischungen sogar auf einem verbesserten Niveau hinsichtlich des Zielkonfliktes aus Rollwiderstand und Nassgriff. Gleichzeitig zeigen die Mischungen E10 und E11 verringerte Ausvulkanisationszeiten, sodass sich bei der Herstellung von Fahrzeugreifen damit eine Kostenersparnis bei der Vulkanisation der Reifen ergibt.

Mit der erfindungsgemäßen Kautschukmischung ist es, wie die verschiedenen Ausführungsformen zeigen, möglich, z.B. durch die Verwendung im Laufstreifen von Fahrzeugreifen möglich, das Handling-Verhalten von Fahrzeugreifen zu verbessern, während der Zielkonflikt aus Rollwiderstand und Nassgriff nicht signifikant nachteilig beeinflusst wird oder sogar verbessert wird.

Gleichzeitig bleiben Heizzeiten bei der Vulkanisation auf gleichem Niveau oder werden sogar dahingehend verringert, dass eine Kostenersparnis bei der Herstellung von Fahrzeugreifen aus der erfindungsgemäßen Kautschukmischung ermöglicht ist.

## Patentansprüche

1. Schwefelvernetzbare Kautschukmischung enthaltend
- wenigstens einen Dienkautschuk und
- 10 bis 200 phr wenigstens einer Kieselsäure und
- 2 bis 20 phf wenigstens eines Silans mit der allgemeinen Summenformel
I) [(R¹)₃Si-X)ₘSₙ(R²)₂₋ₘ
, wobei die Reste R¹ innerhalb eines Moleküls gleich oder verschieden sein können und Alkoxy-Gruppen mit 1 bis 10 Kohlenstoffatomen oder zyklische Dialkoxy-Gruppen mit 2 bis 10 Kohlenstoffatomen oder Cycloalkoxygruppen mit 4 bis 10 Kohlenstoffatomen oder Phenoxygruppen oder Arylgruppen mit 6 bis 20 Kohlenstoffatomen oder Alkylgruppen mit 1 bis 10 Kohlenstoffatomen oder Alkenylgruppen mit 2 bis 20 Kohlenstoffatomen oder Aralkylgruppen mit 7 bis 20 Kohlenstoffatomen oder Halogenide sind und wobei X eine polare organische harnstoffhaltige Gruppe ist und wobei m den Wert 1 oder 2 annimmt und wobei n eine ganze Zahl von 1 bis 8 ist und wobei R² ein Wasserstoffatom oder eine Acylgruppe mit 1 bis 20 Kohlenstoffatomen ist, wobei die polare organische harnstoffhaltige Gruppe X wenigstens ein Harnstoff-Derivat als polare Funktionalität aufweist, welches an den beiden Stickstoffatomen eine organische Kohlenwasserstoffgruppe trägt, wobei die Gruppe zwischen dem ersten Stickstoffatom der harnstoffhaltigen Gruppe und dem Schwefel der Sₙ-Gruppe aliphatisch ist und die Gruppe zwischen dem zweiten Stickstoffatom der harnstoffhaltigen Gruppe und dem Siliziumatom der (R¹)₃Si-Gruppe aliphatisch oder aromatisch ist.

2. Schwefelvernetzbare Kautschukmischung nach Anspruch 1, **dadurch gekennzeichnet, dass** die polare organische harnstoffhaltige Gruppe X wenigstens ein Harnstoff-Derivat als polare Funktionalität aufweist, welches an den beiden Stickstoffatomen eine organische Kohlenwasserstoffgruppe trägt, wobei die Gruppe zwischen dem ersten Stickstoffatom der harnstoffhaltigen Gruppe und dem Schwefel der Sₙ-Gruppe aliphatisch ist und die Gruppe zwischen dem zweiten Stickstoffatom der harnstoffhaltigen Gruppe und dem Siliziumatom der (R¹)₃Si-Gruppe aliphatisch ist.

3. Schwefelvernetzbare Kautschukmischung nach Anspruch 1, **dadurch gekennzeichnet, dass** die polare organische harnstoffhaltige Gruppe X ein 1-Ethyl-3-Propyl-Harnstoff-Rest ist.

4. Schwefelvernetzbare Kautschukmischung nach einem der vorherigen Ansprüche, **dadurch gekennzeichnet, dass** das Silan die folgende Struktur hat:

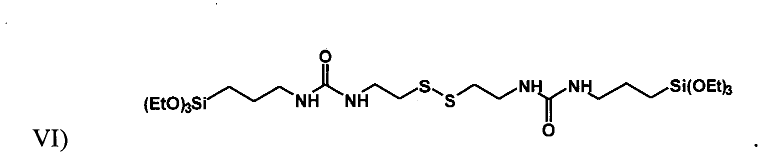

5. Schwefelvernetzbare Kautschukmischung nach einem der Ansprüche 1 bis 3, **dadurch gekennzeichnet, dass** das Silan gemäß Formel I) folgende Parameter aufweist: n = 1 und X = 1-Ethyl-3-Propyl-Harnstoff-Rest und m = 2 und R¹ = EtO.

6. Schwefelvernetzbare Kautschukmischung nach einem der Ansprüche 1 bis 3, **dadurch gekennzeichnet, dass** das Silan gemäß Formel I) folgende Parameter aufweist: n = 4 und X = 1-Ethyl-3-Propyl-Harnstoff-Rest und m = 2 und R¹ = EtO.

7. Schwefelvernetzbare Kautschukmischung nach einem der Ansprüche 1 bis 3, **dadurch gekennzeichnet, dass** das Silan gemäß Formel I) folgende Parameter aufweist: n = 1 und X = 1-Ethyl-3-Propyl-Harnstoff-Rest und m = 1 und R¹ = EtO und R² = H.

8. Schwefelvernetzbare Kautschukmischung nach einem der Ansprüche 1 bis 3, **dadurch gekennzeichnet, dass** das Silan gemäß Formel I) folgende Parameter aufweist: n = 1 und X = 1-Ethyl-3-Propyl-Harnstoff-Rest und m = 1 und R¹ = EtO und R² = Acetyl.

9. Schwefelvernetzbare Kautschukmischung nach einem der vorherigen Ansprüche, **dadurch gekennzeichnet, dass** sie 5 bis 40 phr wenigstens eines natürlichen und/oder wenigstens eines synthetischen Polyisoprens und 25 bis 85 phr wenigstens eines Styrol-Butadien-Kautschuks enthält.

10. Schwefelvernetzbare Kautschukmischung nach einem der vorherigen Ansprüche, **dadurch gekennzeichnet, dass** sie 5 bis 30 phr wenigstens eines natürlichen und/oder wenigstens eines synthetischen Polyisoprens und 25 bis 80 phr wenigstens eines Styrol-Butadien-Kautschuks und 5 bis 50 phr wenigstens eines Butadien-Kautschuks enthält.

11. Fahrzeugreifen, **dadurch gekennzeichnet, dass** er in wenigstens einem Bauteil eine schwefelvernetzbare Kautschukmischung nach einem der vorhergehenden Ansprüche enthält.

12. Fahrzeugreifen nach Anspruch 11, **dadurch gekennzeichnet, dass** es sich bei dem Bauteil um einen Laufstreifen handelt.

13. Verwendung einer schwefelvernetzbaren Kautschukmischung nach einem der Ansprüche 1 bis 10 in Fahrzeugreifen zur Verbesserung des Handling-Verhaltens bei gleichbleibendem Zielkonflikt zwischen Rollwiderstand versus Nassgriff von Fahrzeugreifen.

## Claims

1. Sulfur-crosslinkable rubber mixture comprising
- at least one diene rubber and
- 10 to 200 phr of at least one silica and
- 2 to 20 phf of at least one silane having the general empirical formula
I) [(R¹)₃Si-X]ₘSₙ(R²)₂₋ₘ
where the R¹ radicals may be the same or different within one molecule and are alkoxy groups having 1 to 10 carbon atoms or cyclic dialkoxy groups having 2 to 10 carbon atoms or cycloalkoxy groups having 4 to 10 carbon atoms or phenoxy groups or aryl groups having 6 to 20 carbon atoms or alkyl groups having 1 to 10 carbon atoms or alkenyl groups having 2 to 20 carbon atoms or aralkyl groups having 7 to 20 carbon atoms or halides, and where X is a polar organic urea-containing group and where m assumes the value of 1 or 2 and where n is an integer from 1 to 8 and where R² is a hydrogen atom or an acyl group having 1 to 20 carbon atoms, where the polar organic urea-containing X group has at least one urea derivative as polar functionality which bears an organic hydrocarbyl group on the two nitrogen atoms, where the group between the first nitrogen atom of the urea-containing group and the sulfur of the Sₙ group is aliphatic and the group between the second nitrogen atom of the urea-containing group and the silicon atom of the (R¹)₃Si group is aliphatic or aromatic.

2. Sulfur-crosslinkable rubber mixture according to Claim 1, **characterized in that** the polar organic urea-containing X group has at least one urea derivative as polar functionality which bears an organic hydrocarbyl group on the two nitrogen atoms, where the group between the first nitrogen atom of the urea-containing group and the sulfur of the Sₙ group is aliphatic and the group between the second nitrogen atom of the urea-containing group and the silicon atom of the (R¹)₃Si group is aliphatic.

3. Sulfur-crosslinkable rubber mixture according to Claim 1, **characterized in that** the polar organic urea-containing X group is a 1-ethyl-3-propylurea radical.

4. Sulfur-crosslinkable rubber mixture according to any of the preceding claims, **characterized in that** the silane has the following structure:

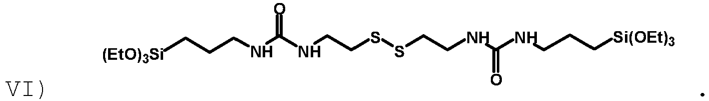

5. Sulfur-crosslinkable rubber mixture according to any of Claims 1 to 3, **characterized in that** the silane of formula I) has the following parameters: n = 1 and X = 1-ethyl-3-propylurea radical and m = 2 and R¹ = EtO.

6. Sulfur-crosslinkable rubber mixture according to any of Claims 1 to 3, **characterized in that** the silane of formula I) has the following parameters: n = 4 and X = 1-ethyl-3-propylurea radical and m = 2 and R¹ = EtO.

7. Sulfur-crosslinkable rubber mixture according to any of Claims 1 to 3, **characterized in that** the silane of formula I) has the following parameters: n = 1 and X = 1-ethyl-3-propylurea radical and m = 1 and R¹ = EtO and R² = H.

8. Sulfur-crosslinkable rubber mixture according to any of Claims 1 to 3, **characterized in that** the silane of formula I) has the following parameters: n = 1 and X = 1-ethyl-3-propylurea radical and m = 1 and R¹ = EtO and R² = acetyl.

9. Sulfur-crosslinkable rubber mixture according to any of the preceding claims, **characterized in that** it comprises 5 to 40 phr of at least one natural polyisoprene and/or at least one synthetic polyisoprene and 25 to 85 phr of at least one styrenebutadiene rubber.

10. Sulfur-crosslinkable rubber mixture according to any of the preceding claims, **characterized in that** it comprises 5 to 30 phr of at least one natural polyisoprene and/or at least one synthetic polyisoprene and 25 to 80 phr of at least one styrenebutadiene rubber and 5 to 50 phr of at least one butadiene rubber.

11. Vehicle tyre, **characterized in that** it comprises a sulfur-crosslinkable rubber mixture according to any of the preceding claims in at least one component.

12. Vehicle tyre according to Claim 11, **characterized in that** the component is a tread.

13. Use of a sulfur-crosslinkable rubber mixture according to any of Claims 1 to 10 in vehicle tyres to improve handling characteristics without affecting the trade-off between rolling resistance and wet grip of vehicle tyres.

## Revendications

1. Mélange de caoutchouc réticulable au soufre, contenant :
- au moins un caoutchouc diénique et
- 10 à 200 phr d'au moins une silice et
- 2 à 20 phf d'au moins un silane ayant la formule globale générale :
I) [(R¹)₃Si-X]ₘSₙ(R²)₂₋ₘ
, les radicaux R¹ dans une molécule pouvant être identiques ou différents et étant des groupes alcoxy contenant 1 à 10 atomes de carbone ou des groupes dialcoxy cycliques contenant 2 à 10 atomes de carbone ou des groupes cycloalcoxy contenant 4 à 10 atomes de carbone ou des groupes phénoxy ou des groupes aryle contenant 6 à 20 atomes de carbone ou des groupes alkyle contenant 1 à 10 atomes de carbone ou des groupes alcényle contenant 2 à 20 atomes de carbone ou des groupes aralkyle contenant 7 à 20 atomes de carbone ou des halogénures, et X étant un groupe organique polaire contenant de l'urée, et m prenant la valeur 1 ou 2, et n étant un nombre entier de 1 à 8, et R² étant un atome d'hydrogène ou un groupe acyle contenant 1 à 20 atomes de carbone, le groupe organique polaire contenant de l'urée X comprenant au moins un dérivé d'urée en tant que fonctionnalité polaire, qui porte un groupe hydrocarboné organique sur les deux atomes d'azote, le groupe entre le premier atome d'azote du groupe contenant de l'urée et le soufre du groupe Sₙ étant aliphatique et le groupe entre le deuxième atome d'azote du groupe contenant de l'urée et l'atome de silicium du groupe (R¹)₃Si étant aliphatique ou aromatique.

2. Mélange de caoutchouc réticulable au soufre selon la revendication 1, **caractérisé en ce que** le groupe organique polaire contenant de l'urée X comprend au moins un dérivé d'urée en tant que fonctionnalité polaire, qui porte un groupe hydrocarboné organique sur les deux atomes d'azote, le groupe entre le premier atome d'azote du groupe contenant de l'urée et le soufre du groupe Sₙ étant aliphatique et le groupe entre le deuxième atome d'azote du groupe contenant de l'urée et l'atome de silicium du groupe (R¹)₃Si étant aliphatique.

3. Mélange de caoutchouc réticulable au soufre selon la revendication 1, **caractérisé en ce que** le groupe organique polaire contenant de l'urée X est un radical 1-éthyl-3-propyl-urée.

4. Mélange de caoutchouc réticulable au soufre selon l'une quelconque des revendications précédentes, **caractérisé en ce que** le silane a la structure suivante :

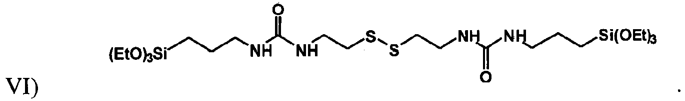

5. Mélange de caoutchouc réticulable au soufre selon l'une quelconque des revendications 1 à 3, **caractérisé en ce que** le silane selon la formule I) présente les paramètres suivants : n = 1 et X = radical 1-éthyl-3-propyl-urée et m = 2 et R¹ = EtO.

6. Mélange de caoutchouc réticulable au soufre selon l'une quelconque des revendications 1 à 3, **caractérisé en ce que** le silane selon la formule I) présente les paramètres suivants : n = 4 et X = radical 1-éthyl-3-propyl-urée et m = 2 et R¹ = EtO.

7. Mélange de caoutchouc réticulable au soufre selon l'une quelconque des revendications 1 à 3, **caractérisé en ce que** le silane selon la formule I) présente les paramètres suivants : n = 1 et X = radical 1-éthyl-3-propyl-urée et m = 1 et R¹ = EtO et R² = H.

8. Mélange de caoutchouc réticulable au soufre selon l'une quelconque des revendications 1 à 3, **caractérisé en ce que** le silane selon la formule I) présente les paramètres suivants : n = 1 et X = radical 1-éthyl-3-propyl-urée et m = 1 et R¹ = EtO et R² = acétyle.

9. Mélange de caoutchouc réticulable au soufre selon l'une quelconque des revendications précédentes, **caractérisé en ce qu'**il contient 5 à 40 phr d'au moins un polyisoprène naturel et/ou d'au moins un polyisoprène synthétique et 25 à 85 phr d'au moins un caoutchouc de styrène-butadiène.

10. Mélange de caoutchouc réticulable au soufre selon l'une quelconque des revendications précédentes, **caractérisé en ce qu'**il contient 5 à 30 phr d'au moins un polyisoprène naturel et/ou d'au moins un polyisoprène synthétique et 25 à 80 phr d'au moins un caoutchouc de styrène-butadiène et 5 à 50 phr d'au moins un caoutchouc de butadiène.

11. Pneu de véhicule, **caractérisé en ce qu'**il contient un mélange de caoutchouc réticulable au soufre selon l'une quelconque des revendications précédentes dans au moins un composant.

12. Pneu de véhicule selon la revendication 11, **caractérisé en ce que** le composant consiste en une bande de roulement.

13. Utilisation d'un mélange de caoutchouc réticulable au soufre selon l'une quelconque des revendications 1 à 10 dans des pneus de véhicule pour améliorer le comportement de maniabilité tout en maintenant le compromis entre résistance au roulement et adhérence sur sol mouillé de pneus de véhicule.
